# EUROPEAN PATENT APPLICATION

(11) **EP 4 847 545 A1**
(43) Date of publication of application: **02.12.2026**
(21) Application number: 24728114.0
(22) Date of filing: 26.02.2024
(51) Int. Cl.: C08G 18/66, C08G 18/48, C08G 18/32, C08J 9/12, A43B 13/04, A43B 13/12, C08L 75/08, C08G 101/00

(54) **TPU SUPERCRITICAL FOAMING MATERIAL AND METHOD FOR FABRICATING MIDSOLES IN FOOTWEAR**

(30) Priority: 22.01.2024 CN 202410088184
(71) Applicant: Qingdao Chang Jie Technology Co., Ltd, Qingdao, Shandong 266000 (CN)
(72) Inventor: LI, Chumin, Qingdao, Shandong 266000 (CN); LI, Ruidi, Qingdao, Shandong 266000 (CN)
(74) Representative: Murgitroyd & Company
(86) International application number: PCT/CN2024/078521
(87) International publication number: WO 2025/156344

(57) **Abstract**

The present invention discloses a TPU supercritical foaming material and method for preparing a shoe midsole, relates to the technical field of foaming materials, and the main points of the technical solution are that the said material comprises the following raw materials in the following weight portions: (1) 40-80 portions of polyol, (2) 20-50 portions of isocyanate, (3) 4-12 portions of chain extender, (4) 0.1-30 portions of modifier, and (5) supercritical gas. The method of preparing a shoe midsole using the above raw materials, comprising the following steps: S1, mixing the above weight portions of polyol, isocyanate, and chain extender and putting them into a twin-screw extruder for co-mingling to obtain a polymer melt; S2, preparing a supercritical gas through an air intake system, and injecting the supercritical gas and the polymer melt into a single-screw extruder for preparing a molten mixture containing the supercritical gas; S3, injecting the molten mixture into a mold, storing it for a period of time; and S3, inject the molten mixture into a mold, let it stand, open the mold, and then obtain.

## Description

### Field of the Invention

The present invention relates to the technical field of foaming materials, and more particularly to a TPU supercritical foaming material used for middle soles and the method for preparing the material herewith.

### Background of the Invention

Polyurethane foaming materials are generally divided into thermosetting polyurethane foaming materials and thermoplastic polyurethane foaming materials according to the characteristics of raw materials and molecular structure of end products. Conventional thermosetting polyurethane foams are usually prepared by the reaction of polyols and isocyanates while introducing water into the system as a foaming agent. However, open cell foams such as sponges are often obtained with the above materials and methods. Due to relatively poor physical and mechanical properties, thermosetting polyurethane materials have not been widely used in the production of middle soles of high-performance sports shoes.

Thermoplastic polyurethane elastomers (TPUs) have been used in the production of middle soles of traditional sports shoes due to their good processability. The invention patent application with a publication number of CN105884998A discloses a method for preparing a foamed thermoplastic polyurethane elastomer material. In its technical route, it needs to be extruded twice. Through this method, the product has a specific gravity of more than 0.165g/cc, a shape of foamed pellet, and then is molded to form middle sole. The invention patent application with a publication number of CN102276785A discloses a low-density foamed thermoplastic polyurethane elastomer and its preparation process. Through this method, samples are prepared using polyols, chain extenders, isocyanates, azo foaming agents, etc. with a density of more than 0.26 g/cc, and foaming is realized using chemical foaming agents.

In the prior art, the supercritical midsole foaming mainly includes four solutions: 1. Prepare TPU pellets and perform molding with them; 2. Mix raw materials and carry out injection molding/casting to obtain billets which need undergo supercritical autoclave foaming; 3. Perform supercritical foaming after extruding sheets, cut them to obtain desired shape to make middle sole; 4. Add supercritical fluid in the injection molding process, and open the mold to obtain the product. Regarding the above solutions, the problems of inconsistency between transverse and longitudinal magnifications, bending deformation, low yield, etc. would occur to the products foamed by TPU pellet injection molding under the influence of orientation internal stress; or the cutting method would result in great waste and low utilization.

### Summary of the Invention

In light of the shortcomings of the prior art, the present invention is to provide a TPU supercritical foaming material used for middle soles and a method for preparing the material, which does not go through the steps of preparing TPU pellets, avoids the adverse effects of internal stresses of TPU pellets, and does not cause any waste of raw materials from cutting, etc.

In order to achieve the purpose mentioned above, the present invention provides the following technical solution: A TPU supercritical foaming material used for making middle soles, characterized in that the material comprises the following raw materials in parts by weight:
(1) 40-80 portions of polyols;
(2) 20-50 portions of isocyanates;
(3) 4-12 portions of chain extenders;
(4) 0.1-30 portions of modifiers;
(5) Supercritical gases.

Furthermore, the polyols are bifunctional, including but not limited to one or more mixtures of polyester polyol, polyether polyol, polycaprolactone, polycarbonate, and bio-based diol.

Furthermore, the isocyanates are bifunctional, including but not limited to aromatic, aliphatic or cycloaliphatic isocyanates.

Furthermore, the isocyanates are bifunctional, including but not limited to one or more mixtures of diphenylmethane diisocyanate, toluene diisocyanate, hexamethylene diisocyanate, isophorone diisocyanate, dicyclohexylmethane-4,4'-diisocyanate, xylylene diisocynate, tetra-methyl xylylene diisocyanate, lysine diisocyanate, p-phenylene diisocyanate, and cyclohexane-1,4-diisocyanate.

Furthermore, the molar ratio of isocyanate functional groups - NCO to hydroxyl functional groups - OH is (0.7-1.5): 1.

Furthermore, the chain extenders are bifunctional alcohols, including but not limited to one or more mixtures of ethylene glycol, 1,2-propanediol, 1,4-butanediol, and 1,6-hexanediol.

Furthermore, the modifiers include, but are not limited to one or more mixtures of masterbatch, coupling agent, toughening agent, and filler.

Furthermore, the supercritical gases are a mixture of two or more components of carbon dioxide, nitrogen, air, and water vapor.

A preparation method for preparing the TPU supercritical foam material mentioned above, comprises the following steps:
S1. Mix the polyols, isocyanates, and chain extenders in parts by weight and put into a twin-screw extruder to blend them to obtain a polymer melt;
S2. Prepare supercritical gases through the air inlet system, inject the supercritical gases and polymer melt into a single screw extruder to prepare a molten mixture containing supercritical gases;
S3. Inject the molten mixture into a mold, let it stand, and open the mold to obtain the material.

Furthermore, adding the modifiers in S1, said modifiers include, but are not limited to one or more mixtures of masterbatch, coupling agent, toughening agent, and filler.

Furthermore,the working parameters of the mold in S3 include pressure of 5-20MPa and standing time of 30s-2h at 30-150°C.

With the method of the present invention, the preparation of TPU pellets was not included in the steps, the blending and reaction of raw materials prepared in accordance with the components and parts by weight in the present invention were carried out in a twin-screw extruder, and the polymers with predetermined hardness and resilience were obtained by bulk polymerization to avoid the internal stresses of TPU pellets. Two or more supercritical mixed gases are used in the present invention to avoid the defects of limited solubility and diffusivity of a single supercritical fluid in the polymer. The use of supercritical mixed gases can improve the dissolution of supercritical fluid in the polymer, increase the foaming ratio of prepared products, and lower the specific gravity. The specific gravity and hardness of the middle soles made by the TPU supercritical foaming material presented in the present invention is 0.06-0.2 g/cc and 10-50 Asker C, respectively.

### Brief Description of the Drawings

FIG.1 is a diagram of the relationship between the torque and time of Haake rheometer where TPUs provided in the embodiments and comparisons of the present invention undergo banbury mixing. In the figure, the blue curve indicates Embodiment 1, the green curve indicates Embodiment 2, and the red curve indicates Embodiment 3;
FIG.2 shows the SEM diagrams of the foamed middle soles in the embodiments and comparisons of the present invention, in which a indicates Embodiment 1, b indicates Embodiment 2, c indicates Embodiment 3, d indicates Comparison 1, and e indicates Comparison 2.

### Detailed Description of the Embodiments

The present invention will be further described in detail below in conjunction with the embodiments.

### Embodiment 1:

60 portions of polytetramethylene ether glycol, 6 portions of 1,4-butanediol, and 32 portions of MDI-100 with a hard segment content of 38% and an NCO coefficient of 1.01 were mixed, put into a twin-screw extruder, and blended at 180°C to obtain a polymer melt; the ratio of CO₂ to N₂ in the air inlet system was set to 10 : 90, and the supercritical gases and polymer melt were injected into a single-screw extruder to prepare a molten mixture containing supercritical gases; the mixture was injected into a mold at 40°C. After holding pressure for 30 minutes, the mold was opened to release pressure to obtain a mid-sole product.

### Embodiment 2:

60 portions of polytetramethylene ether glycol, 8 portions of 1,4-butanediol, and 38 portions of MDI-100 with a hard segment content of 43% and an NCO coefficient of 1.01 were mixed, put into a twin-screw extruder, and blended at 190°C to obtain a polymer melt; the ratio of CO2 to N2 in the air inlet system was set to 10 : 90, and the supercritical gases and polymer melt were injected into a single-screw extruder to prepare a molten mixture containing supercritical gases; the mixture was injected into a mold at 40°C. After holding pressure for 25 minutes, the mold was opened to release pressure to obtain a mid-sole product.

### Embodiment 3:

60 portions of polytetramethylene ether glycol, 10 portions of 1,4-butanediol, and 44 portions of MDI-100 with a hard segment content of 47% and an NCO coefficient of 1.01 were mixed, put into a twin-screw extruder, and blended at 200°C to obtain a polymer melt; the ratio of CO2 to N2 in the air inlet system was set to 10 : 90, and the supercritical gases and polymer melt were injected into a single-screw extruder to prepare a molten mixture containing supercritical gases; the mixture was injected into a mold at 40°C. After holding pressure for 20 minutes, the mold was opened to release pressure to obtain a mid-sole product.

Comparison 1: The middle sole obtained by autoclave foaming with the TPU two-step method provided in the invention patent application with a publication number of CN108081652A.

Comparison 2: The middle sole obtained by cutting, polishing and secondary molding with the TPU foam sheet provided in the invention patent application with a publication number of CN110524781A.

### Performance Testing

The hardness, resilience and specific gravity of those in the embodiments and comparisons of the present invention were tested by the following methods:
Hardness: Tested according to the method of ASTM D2240;
Resilience: Tested according to the method of DIN 53512;
Specific gravity: Tested according to the method of ISO 845-2006;

The test results are shown in Table 1.

**Table 1 Performance Test Results of Each Embodiment and Comparison**

| Name | Hardness (Asker C) | Resilience (%) | Specific gravity (g/cc) |
|---|---|---|---|
| Embodiment 1 | 29 | 74 | 0.08 |
| Embodiment 2 | 36 | 75 | 0.10 |
| Embodiment 3 | 45 | 70 | 0.12 |
| Comparison 1 | 35 | 70 | 0.13 |
| Comparison 2 | 40 | 70 | 0.15 |

From Table 1, the middle soles produced in the embodiments of the present invention are characterized by adjustable hardness within 20-50 Asker C, low specific gravity of less than 0.12 g/cc, and good resilience; while those produced in Comparisons 1 and 2 have large specific gravity and poor resilience.

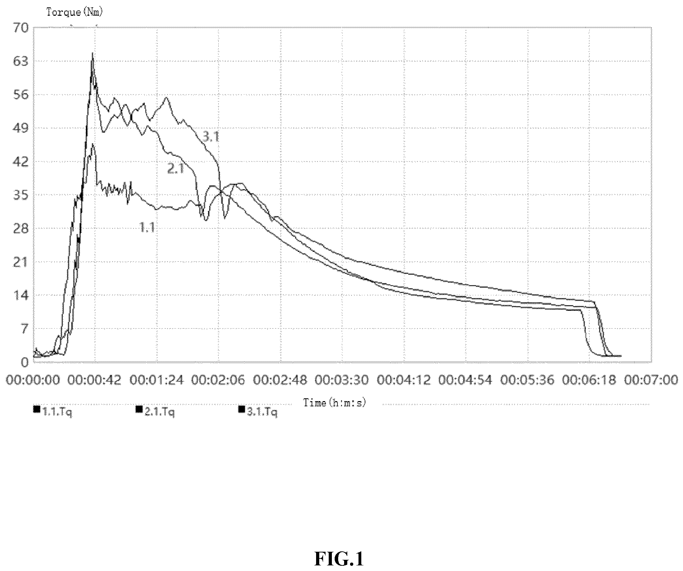

A Haake rheometer was used to test the intermediate product (polymer melt) in each embodiment of the present invention. The temperatures of Zone 1, Zone 2 and Zone 3 in the Haake rheometer were set to 120°C, 120°C and 120°C, respectively, and the rotational speed was 60 rpm. The results are shown in FIG.1. In FIG.1, the different torque peaks represent the different hardness of the material, and the different times of torque reduction represent the melting rate of the material, which can reflect the different melting points of the material. From FIG.1, the MDI hard segment component whose content was increased sequentially was added into the raw material in Embodiments 1-3, and the hardness of the intermediate product obtained by the reaction was increased sequentially; due to the increase in the hard segment content, the energy required for melting the material was higher, so the melting point of the material was increased sequentially; by adjusting the MDI hard segment content of the raw material, the hardness of the product could be flexibly adjusted to expand the scope of application of the product; the sample in Embodiment 1 exhibited lower torque at the early stage with the lowest hardness; the samples in Embodiments 2 and 3 had similar torque at the early stage, but the inflection point in Embodiment 2 appeared earlier, and their melting temperatures were lower than that of Embodiment 3. Therefore, it can be analyzed that the hardness and melting points of the samples in Embodiments 1, 2 and 3 were increased sequentially, which meets the anticipation of hardness adjustment by adjusting the MDI hard segment content of raw materials.

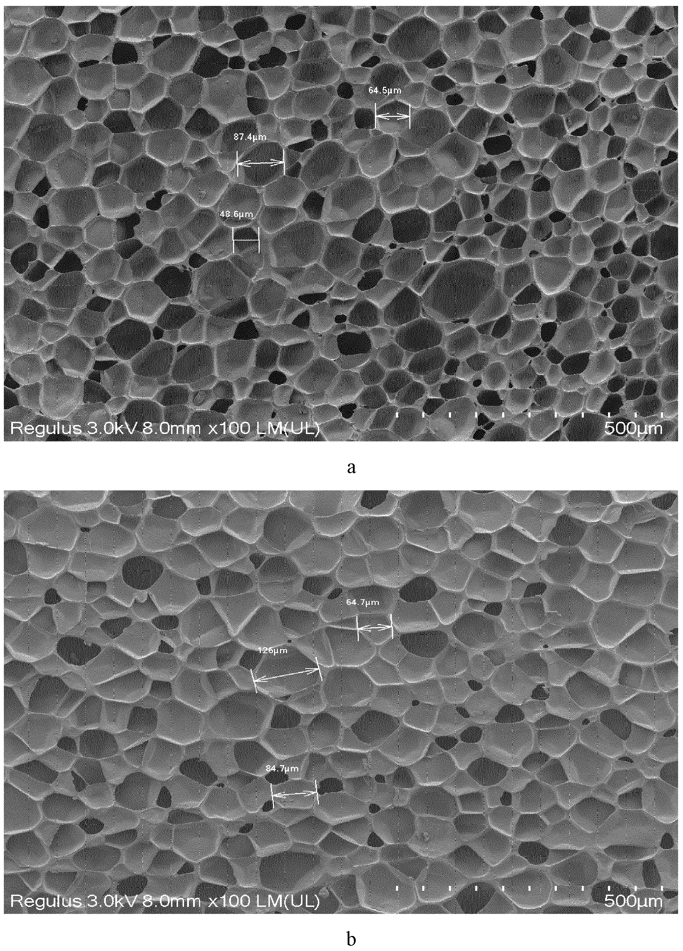

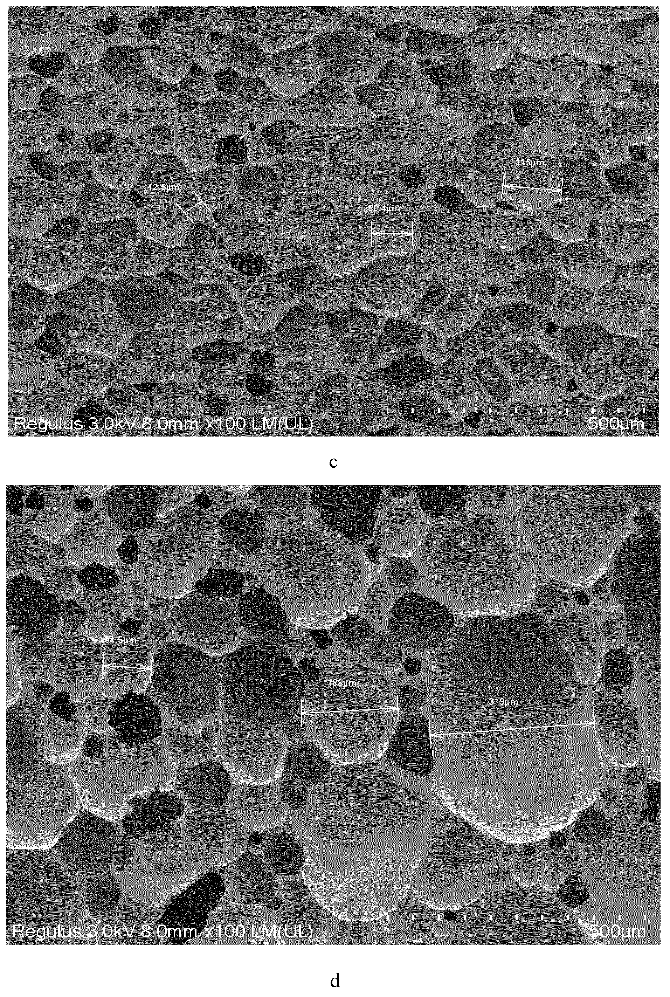

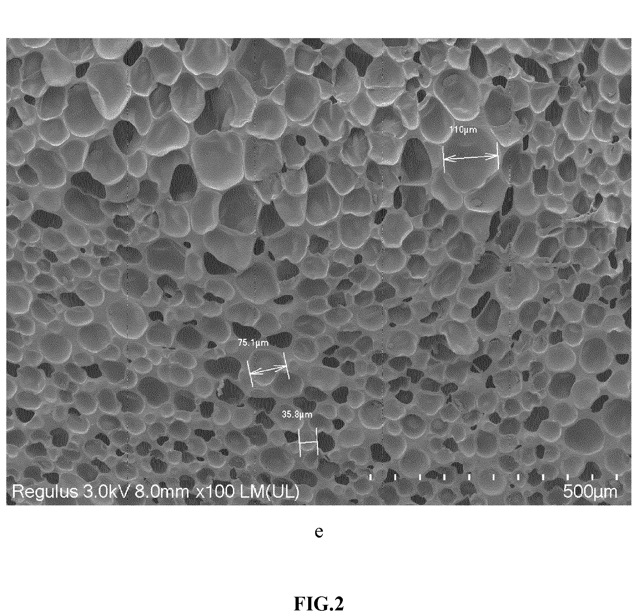

FIG.2 shows that the middle soles made by the TPU supercritical foaming material in the present invention have uniform and dense cells, which are obviously superior to the TPU middle sole made by the two-step method in Comparison 1, and rival the middle sole by sheet foaming and cutting in Comparison 2. Although the orientation internal stresses of the middle sole by sheet foaming and cutting can be reduced, the foamed sheets are made in the production step, and then cut into the required sole shape before secondary molding, which greatly increases production cost, offcuts waste, and cutting cost; the performance of the middle soles in the present invention is similar to that of the product in Comparison 2, which avoids waste of materials from cutting, does not need cutting equipment, and greatly reduces production cost.

In the present invention, the preparation of TPU pellets was not included in the steps, the blending and reaction of the raw materials prepared in accordance with the components and parts by weight in the present invention were carried out in a twin-screw extruder, and the polymers with predetermined hardness and resilience were obtained by bulk polymerization to avoid the internal stresses of TPU pellets so as to reduce the deformation of prepared middle soles and improve the yield of products. Two or more supercritical mixed gases are used in the present invention to avoid the defects of limited solubility and diffusivity of a single supercritical fluid in the polymer. The use of the supercritical mixed gases can improve the dissolution of the supercritical fluid in the polymer, increase the foaming ratio of the prepared product, and lower the specific gravity. The middle soles made by the TPU supercritical foaming material presented in the present invention have specific gravity of 0.06-0.2 g/cc, hardness of 10-50, good resilience, excellent performance, and no conventional cutting is required, reducing waste and saving costs.

The embodiments are merely an interpretation of the present invention, and are not to limit the present invention. Those skilled in the art may make modifications to the embodiments without creative contributions as needed after reading the specification, which shall be protected by the patent law within the scope of the claims of the present invention.

## Claims

1. A TPU supercritical foaming material used for making middle soles, **characterized in that** the material comprises the following raw materials in parts by weight:
(1) 40-80 portions of polyols;
(2) 20-50 portions of isocyanates;
(3) 4-12 portions of chain extenders;
(4) 0.1-30 portions of modifiers;
(5) Supercritical gases.

2. The TPU supercritical foaming material used for making middle soles according to claim 1, **characterized in that** the polyols are bifunctional, including but not limited to one or more mixtures of polyester polyol, polyether polyol, polycaprolactone, polycarbonate, and bio-based diol.

3. The TPU supercritical foaming material for making middle soles according to claim 2, **characterized in that** the isocyanates are bifunctional, including but not limited to aromatic, aliphatic or cycloaliphatic isocyanates.

4. The TPU supercritical foaming material used for making middle soles according to claim 1, **characterized in that** the isocyanates are bifunctional, including but not limited to one or more mixtures of diphenylmethane diisocyanate, toluene diisocyanate, hexamethylene diisocyanate, isophorone diisocyanate, dicyclohexylmethane-4,4'-diisocyanate, xylylene diisocynate, tetra-methyl xylylene diisocyanate, lysine diisocyanate, p-phenylene diisocyanate, and cyclohexane-1,4-diisocyanate.

5. The TPU supercritical foaming material used for making middle soles according to claim 3, **characterized in that** the molar ratio of isocyanate functional groups - NCO to hydroxyl functional groups - OH is (0.7-1.5): 1.

6. The TPU supercritical foaming material used for making middle soles according to claim 1, **characterized in that** the chain extenders are bifunctional alcohols, including but not limited to one or more mixtures of ethylene glycol, 1,2-propanediol, 1,4-butanediol, and 1,6-hexanediol.

7. The TPU supercritical foaming material used for making middle soles according to claim 1, **characterized in that** the modifiers include, but are not limited to one or more mixtures of masterbatch, coupling agent, toughening agent, and filler.

8. The TPU supercritical foaming material used for making middle soles according to claim 1, **characterized in that** the supercritical gases are a mixture of two or more components of carbon dioxide, nitrogen, air, and water vapor.

9. A preparation method for preparing the TPU supercritical foam material according to any one of claims 1 to 8, **characterized in that** it comprises the following steps:
S1. Mix the polyols, isocyanates, and chain extenders in parts by weight and put into a twin-screw extruder to blend them to obtain a polymer melt;
S2. Prepare supercritical gases through the air inlet system, inject the supercritical gases and polymer melt into a single screw extruder to prepare a molten mixture containing supercritical gases;
S3. Inject the molten mixture into a mold, let it stand, and open the mold to obtain the material.

10. The preparation method according to claim 9, **characterized in that** the working parameters of the mold in S3 include pressure of 5-20MPa and standing time of 30s-2h at 30-150°C.
